# EUROPÄISCHE PATENTANMELDUNG

(11) **EP 4 830 857 A1**
(43) Veröffentlichungstag der Anmeldung: **28.10.2026**
(21) Anmeldenummer: 26159643.1
(22) Anmeldetag: 19.02.2026
(51) Int. Cl.: B23G 5/20, B23G 7/02

(54) **GEWINDEFORMWERKZEUG MIT REIBBEREICH, GEWINDEERZEUGUNGSVERFAHREN SOWIE WERKSTÜCK MIT EINEM GEWINDE**

(30) Priorität: 23.04.2025 DE 102025115734; 20.10.2025 DE 102025142854
(71) Anmelder: EMUGE-Werk Richard Glimpel GmbH & Co.KG Fabrik für Präzisionswerkzeuge, 91207 Lauf a.d. Pegnitz (DE)
(72) Erfinder: Glimpel, Helmut, 91207 Lauf an der Pegnitz (DE); Ramskogler, Christian, 90592 Schwarzenbruck (DE); Fenzel, Jürgen, 91245 Simmelsdorf (DE); Gräuler, Dirk, 49191 Belm (DE); List, Andrea, 8424 Gabersdorf (AT)
(74) Vertreter: Meissner Bolte Nürnberg

(57) **Zusammenfassung**

Gewindeformwerkzeug (1) mit einem ein Gewindeformprofil (10) aufweisenden Gewindeformbereich (2) und einem Reibbereich (3), wobei das Gewindeformwerkzeug (1) dafür vorgesehen ist, zur Erzeugung eines Gewindes in einer definierten Vorschubrichtung (V) zu werden, wobei der Gewindeformbereich (2) in Vorschubrichtung (V) vor dem Reibbereich (3) angeordnet ist, wobei das Gewindeformprofil (10) einen bezogen auf eine Werkzeuglängsachse (A) maximalen radialen Gewindeformprofildurchmesser (DFurch_{Max}) aufweist und wobei der Reibbereich (3) einen bezogen auf die Werkzeuglängsachse (A) maximalen radialen Reibbereichsdurchmesser (DReib) aufweist und wobei der maximale radiale Gewindeformprofildurchmesser (DFurch_{Max}) des Gewindeformbereichs (2) größer ist als der maximale radiale Reibbereichsdurchmesser (DReib) des Reibbereichs (3).

## Beschreibung

Die Erfindung betrifft ein Gewindeformwerkzeug mit einem Reibbereich sowie ein Gewindeerzeugungsverfahren und ein Werkstück mit einem Gewinde.

Spanlose Gewindeerzeugungswerkzeuge werden auch als Gewindeformwerkzeuge oder Gewindeformer bezeichnet. Darunter fallen die sogenannten Gewindefurcher zum Erzeugen von Innengewinden in Kernlöchern in Werkstücken (vgl. EMUGE-Handbuch, Kapitel 9, Seiten 299 bis 324). Gewindefurcher weisen in einem an einem Werkzeugschaft ausgebildeten Arbeitsbereich eine zentrale Werkzeugachse entlang einer an die Gewindesteigung des Innengewindes angepassten Schraubenlinie oder Gewindehelix umlaufende Anordnung von Drückstollen (auch Formkeile oder Furchzähne genannt) auf. Die Drückstollen ragen von der Werkzeugachse radial nach außen und drücken durch plastische Umformung das Gewinde bei Drehung des Werkzeugs um die Werkzeugachse und axialem Vorschub entlang der Werkzeugachse in das Werkstück ein. Dazu weisen die Drückstollen in einem Querschnitt senkrecht zur Gewindehelix oder Schraubenlinie ein Gewindeformprofil auf, das entlang der in Richtung der Gewindehelix oder Schraubenlinie betrachteten Länge des Drückstollens zunächst bis auf ein dem Endgewindeprofil des Innengewindes komplementäres Maximalprofil in einem Scheitel- oder Kopfbereich zunimmt und dann wieder abnimmt. Dadurch wird die Umformkraft über die Länge des Drückstollens gleichmäßiger verteilt und die Reibung verringert. Insbesondere sind über den Umfang verteilt mehrere Drückstollen vorgesehen, insbesondere nach Art eines Polygons, wobei zwischen den Drückstollen in der Regel Nuten zum Zuführen von Kühl- und/oder Schmiermittel angeordnet sind. Auch axial zur Werkzeugachse können mehrere Drückstollen des Gewindefurchers um die Gewindesteigung voneinander beabstandet angeordnet sein, insbesondere auf jeweils einem Steg. Hier sind zwischen den Drückstollen des Gewindefurchers ausreichend große axiale Zwischenräume vorzusehen, die radial zur Werkzeugachse deutlich weiter nach innen ragen als der Kernlochdurchmesser und in die das durch die Drückstollen beim Umformen verdrängte Werkstückmaterial hineinfließen kann. Das nach innen verdrängte Werkstückmaterial bildet an der Kernlochwandung zwischen den Gewindegangwindungen eine charakteristische Materialaufwerfung, die auch als Umformkralle oder Schließfalte bezeichnet wird.

Gewindeformwerkzeuge können auch zum Nachbearbeiten beispielsweise Verfestigen oder Verdichten von bereits in einem Kernloch spanabhebend erzeugten Vorgewinden verwendet werden. Auch hier wird das umgeformte Werkstückmaterial radial nach innen in das Kernloch verdrängt und bildet dort die Umformkralle in dem Zwischenraum zwischen zwei axial aufeinanderfolgenden Drückstollen.

Die besagte Umformkralle beim Gewindefurchen zur Ersterzeugung oder Nachbearbeitung eines Gewindes stört beim Einschrauben einer Schraube in der Regel nicht, weil auch bei der Schraube - zur Vermeidung zusätzlicher Reibung - entsprechend tiefe Zwischenräume zwischen dem Außengewindegang vorgesehen sind, die ausreichend von der Umformkralle beabstandet sind.

Allerdings sind beim automatisierten Eindrehen von Schrauben in geformte Gewinde mit Umformkralle Fälle aufgetreten, bei denen die Gewindespitzen und Gewindeflanken der Schraube am Beginn des Gewindelochs in die von der Umformkralle gebildete Kavität einlaufen oder hineinbewegt werden und nicht, wie eigentlich gewünscht, in den dafür vorgesehenen Gewindegrund zwischen benachbarten Gewindeflanken des Muttergewindes.

Aus der DE 7415254 U ist ein Innengewindeformer mit einem Bohr- und/oder Ansenkteil bekannt, der zur Vereinfachung der Fertigung bereitgestellt wird. Mit dem Ansenkteil kann ein bei der spanlosen Herstellung des Innengewindes um die Gewindebohrung herum entstehender, unerwünschter Grat im Gewinde-Herstellungsarbeitsgang zu beseitigen. Mit dem Innengewindeformer nach dem Stand der Technik wird somit der Rand der Gewindebohrung entgratet und mit einer Senkung versehen. Eine solche Senkung beseitig jedoch nicht das Problem, dass die Schraube am Beginn des Gewindelochs in die von der Umformkralle gebildete Kavität einlaufen kann, da durch die Senkung lediglich der Anfang des Gewindes in das Gewindeloch hinein verschoben wird.

Es ist Aufgabe der Erfindung, ein Gewindeformwerkzeug zur Formung von Gewinden bereitzustellen, bei denen ein ordnungsgemäßen Eindrehen von Schrauben, insbesondere bei der automatisierten Verarbeitung, sichergestellt werden kann.

Es ist ebenfalls Aufgabe der Erfindung, ein Gewindeerzeugungsverfahren zur Herstellung von Gewinden in einem Kernloch oder Sackloch oder einem Durchgangsloch eines Werkstücks bereitzustellen, mit denen sichergestellt ist, dass Schrauben, insbesondere bei der automatisierten Verarbeitung, ordnungsgemäß eingedreht werden können.

Darüber hinaus ist es Aufgabe der Erfindung, ein Werkstück mit einem spanlos geformten Gewinde bereitzustellen, bei dem sichergestellt ist, dass Schrauben, insbesondere bei der automatisierten Verarbeitung, ordnungsgemäß eingedreht werden können.

Die Aufgabe ein Gewindeformwerkzeug zur Formung von Gewinden bereitzustellen, bei denen ein ordnungsgemäßen Eindrehen von Schrauben, insbesondere bei der automatisierten Verarbeitung, sichergestellt werden kann, wird durch ein Gewindeformwerkzeug mit den Merkmalen des Patentanspruchs 1 gelöst.

Ein solches Gewindeformwerkzeug mit einem ein Gewindeformprofil aufweisenden Gewindeformbereich und einem Reibbereich ist dafür vorgesehen ist, zur Erzeugung eines Gewindes in einer definierten Vorschubrichtung bewegt zu werden, wobei der Gewindeformbereich in Vorschubrichtung vor dem Reibbereich angeordnet ist, wobei das Gewindeformprofil einen bezogen auf eine Werkzeuglängsachse maximalen radialen Gewindeformprofildurchmesser aufweist und wobei der Reibbereich einen bezogen auf die Werkzeuglängsachse maximalen radialen Reibbereichsdurchmesser aufweist und wobei der maximale radiale Gewindeformprofildurchmesser des Gewindeformbereichs größer ist als der maximale radiale Reibbereichsdurchmesser des Reibbereichs.

Mit einem solchen Werkzeug ist es möglich, ein Gewinde spanlos herzustellen im selben Arbeitsgang eine beim spanlosen Gewindeformen erzeugte Furchkralle in einem genau definierten Bereich des erzeugten Gewindeprofils, beispielswiese entlang eines einem Eingang des Gewindelochs nächstliegenden Gewindeprofilabschnitts, zu entfernen. Gleichzeitig ist es mit diesem Werkzeug möglich, dass nicht der vollständige Zahn entfernt wird, sondern dass eine Gewindeprofilbasis verbleibt, die eine Führungsfunktion für das Gewinde der Schraube ausfüllt und das Gewinde der Schraube in den Gewindegang des Muttergewindes hineinführt. Dadurch können Gewinde hergestellt werden, bei den Schrauben automatisiert eingedreht werden können und bei denen das Risiko, dass die Schraube nicht in den eigentlichen Gewindegang, sondern in die Furchkralle eingedreht wird, vermieden wird.

In einer vorteilhaften Ausgestaltung der Erfindung liegt eine Differenz zwischen maximalen radialen Gewindeformprofildurchmesser und maximalen radialen Reibbereichsdurchmesser in einem Bereich von 0,05mm bis 2mm, insbesondere von 0,15mm bis 1,1mm, vorzugsweise von 0,6mm bis 1mm, liegt.

Mit einem solchen Werkzeug wird eine ausreichende Höhe der verbleibenden Gewindeprofilbasis in dem mit dem Reibbereich bearbeiteten Gewindeprofilabschnitt sichergestellt.

Eine weitere vorteilhafte Ausführungsform umfasst, dass der Reibbereich mindestens einen, insbesondere mehrere, Reibschneiden aufweist,
insbesondere wobei die mehreren Reibschneiden koaxial zur Werkzeuglängsachse an dem Gewindeformwerkzeug angeordnet sind,
   und/oder
insbesondere wobei die mindestens eine, insbesondere mehrere, vorzugsweise alle, Reibschneiden achsparallel zur Werkzeuglängsachse an dem Gewindeformwerkzeug angeordnet ist,
   und/oder
insbesondere wobei die mindestens eine, insbesondere mehrere, vorzugsweise alle, Reibschneiden gekrümmt oder gedrallt oder spiralförmig um die Werkzeuglängsachse herum an dem Gewindeformwerkzeug angeordnet ist.

Je nach zu bearbeitendem Material und Gewindegröße können bestimmte Formen der Reibschneiden ausgewählt werden.

Ferner kann es vorteilhaft sein, wenn der Reibbereich wenigstens einen ersten Abschnitt aufweist, in dem der radiale Außendurchmesser des Reibbereichs konstant bleibt, insbesondere wobei der Reibbereich in dem ersten Abschnitt mindestens eine, vorzugsweise mehrere, Reibschneidenbereiche aufweist, deren radialer Abstand zur Werkzeuglängsachse entlang der Vorschubrichtung konstant bleibt,
und/oder
dass der Reibbereich wenigstens einen zweiten Abschnitt aufweist, in dem der radiale Außendurchmesser des Reibbereichs in einer Richtung entgegen der Vorschubrichtung zunimmt, insbesondere wobei der Reibbereich in dem zweiten Abschnitt mindestens eine, vorzugsweise mehrere, Reibschneidenbereiche aufweist, deren radialer Abstand zur Werkzeuglängsachse in einer Richtung entgegen der Vorschubrichtung zunimmt.

Mit einem Reibschneidenbereich mit konstantem Außendurchmesser ist es möglich, das Gewindeprofil so zu bearbeiten, dass eine Gewindeprofilbasis hergestellt wird, die eine Fläche aufweist, die parallel zur Längsachse des Kern- oder Sack- oder Durchgangslochs angeordnet ist. Mit einem Reibschneidenbereich dessen Abstand zur Werkzeuglängsachse in einer Richtung entgegen der Vorschubrichtung zunimmt ist es möglich, eine Gewindeprofilbasis herzustellen, die eine Fläche aufweist, die in einem Winkel relativ zur Längsachse des Kern- oder Sack- oder Durchgangslochs angeordnet ist. Genauer gesagt ist die resultierende Fläche der Gewindeprofilbasis so geneigt, dass sie mit einer Längsachse des Kern- oder Sack- oder Durchgangslochs und einer den Eingang des Kern- oder Sack- oder Durchgangslochs um das Kern- oder Sack- oder Durchgangsloch herum umgebenden Werkstückoberfläche jeweils einen Winkel von weniger als 90° einschließt. Insbesondere können Reibschneidenbereiche deren radialer Abstand zur Werkzeuglängsachse in einer Richtung entgegen der Vorschubrichtung zunimmt in konkave oder konvexe Reibschneidenbereiche sein oder solche umfassen.

Darüber hinaus kann es vorteilhaft sein, wenn das Gewindeformwerkzeug so ausgebildet ist, dass der Reibbereich wenigstens einen zweiten Abschnitt mit mindestens einem, vorzugsweise mehreren, Reibschneidenbereichen aufweist, wobei die Reibschneidenbereiche des zweiten Abschnitts eine oder mehrere Reibschneiden umfassen, wobei die Reibschneidenbereiche des zweiten Abschnitts oder die von den Reibschneidenbereichen des zweiten Abschnitts umfassten Reibschneiden relativ zur Werkzeuglängsachse in einem Winkel, insbesondere in einem Winkel in einem Winkelbereich von 5° bis 40°, vorzugsweise in einem Winkelbereich 15° bis 30°, besonderes bevorzugt in einem Winkel von 20°, angeordnet sind
und/oder
dass der Reibbereich wenigstens einen zweiten Abschnitt aufweist, der eine oder mehrere Reibschneidenbereiche umfasst, wobei die Reibschneidenbereiche Teilbereiche einer Mantelfläche oder eine vollständige Mantelfläche eines Kegelstumpfes ausbilden.

Derartig ausgebildete Reibbereiche haben sich als besonders effizient herausgestellt, um Furchkrallen entweder vollständig oder nur teilweise zu entfernen.

Vorteilhafterweise kann der zweite Abschnitt in Vorschubrichtung vor dem ersten Abschnitt angeordnet sein, insbesondere indem der zweite Abschnitt unmittelbar in den ersten Abschnitt übergeht.

Auf diese Weise ist es möglich, das Werkzeug entweder so zu betreiben, dass das ein Bereich des Gewindeprofil erst mit dem zweiten und anschließend mit dem ersten Abschnitt bearbeitet wird und ein weiterer Bereich nur mit dem zweiten Abschnitt bearbeitet wird, oder das Werkzeug so zu betreiben, dass das Gewindeprofil nur mit dem zweiten Abschnitt jedoch nicht mit dem ersten Abschnitt bearbeitet wird. Auf diese Weise ist es möglich verschiedene Ausgestaltungen der Gewindeprofilbasis mit demselben Werkzeug herzustellen.

Ferner kann es vorteilhaft sein, wenn der Reibbereich, insbesondere die Reibschneidenbereiche des ersten Abschnitts und/oder die Reibschneidenbereiche des zweiten Abschnitts, eine Steigung aufweisen, die von einer vordefinierten Steigung des Gewindeformbereichs abweicht, insbesondere wobei die Steigung des Reibbereichs in einem Bereich von dem 0,5 fachen bis zum 1,5 fachen der Steigung des Gewindeformbereichs vorgesehen und ungleich der Steigung des Gewindeformbereichs ist.

Damit kann mit genau einer Werkzeugumdrehung um 360° die Furchkralle 30 an dem vordersten Gewindeprofilabschnitt entfernt werden, wobei die vorlaufenden Reibschneiden des Reibbereichs im Gewindegrund zwischen dem vordersten Gewindeprofilabschnitt und dem nachfolgenden Gewindeprofilabschnitt anhalten. Dadurch kann sichergestellt werden, dass der Reibbereich nicht an dem nachfolgenden Gewindeprofilabschnitt weiterarbeitet.

Außerdem kann es vorteilhaft sein, wenn der Reibbereich, insbesondere die Reibschneidenbereiche des zweiten Abschnitts, eine axiale Länge L4 aufweist, die kürzer ist als eine vordefinierte Steigung des Gewindeformbereichs. In diesem Fall kann mit genau einer Werkzeugumdrehung um 360° die Furchkralle 30 an einem um weniger als 360° umlaufenden Gewindeprofilabschnitt entfernt werden.

Eine weitere vorteilhafte Ausführungsform umfasst, dass der Gewindeformbereich von dem Reibbereich durch mindestens einen Verbindungsabschnitt getrennt ist, wobei das Gewindeformprofil einen bezogen auf eine Werkzeuglängsachse minimalen radialen Gewindeformprofildurchmesser aufweist und wobei der Verbindungsabschnitt einen Verbindungsabschnittsdurchmesser aufweist, der geringer ist als der minimale radiale Gewindeformprofildurchmesser.

Durch das Vorsehen eines Verbindungsabschnitts zwischen Gewindeformbereich und Reibbereich kann insgesamt eine größere Tiefe des zu erzeugenden Gewindes erreicht werden, verglichen mit einer Ausführung ohne Verbindungsabschnitt.

Eine weitere vorteilhafte Ausführungsform ist dadurch gekennzeichnet, dass der Gewindeformbereich von dem Reibbereich durch mindestens einen Verbindungsabschnitt getrennt ist, der eine Verbindungsabschnittslänge L3 in Richtung der Werkzeuglängsachse aufweist, wobei der Gewindeformbereich in Richtung der Werkzeuglängsachse eine Gewindeformbereichslänge L2 aufweist, wobei der Gewindeformbereich einen Anfurchkegel mit einer Anfurchkegellänge L5 in Richtung der Werkzeuglängsachse aufweist und bei dem eine der folgenden Bedingungen erfüllt ist: 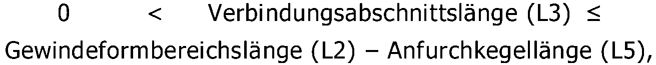 0 < Verbindungsabschnittslänge (L3) ≤ Gewindeformbereichslänge (L2) - Anfurchkegellänge (L5), oder 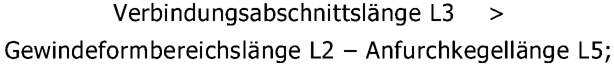 Verbindungsabschnittslänge L3 > Gewindeformbereichslänge L2 - Anfurchkegellänge L5;

Mit einem solchen Werkzeug kann ein Gewinde mit einer Tiefe von wenigstens zwei mal der Länge der Gewindeformbereichslänge minus der Anfurchkegellänge hergestellt werden, bevor der Reibbereich mit dem Gewindeformprofil in Kontakt tritt.

Die Aufgabe der Erfindung, ein Gewindeerzeugungsverfahren zur Herstellung von Gewinden in einem Kernloch oder Sackloch oder einem Durchgangsloch eines Werkstücks bereitzustellen, mit denen sichergestellt ist, dass Schrauben, insbesondere bei der automatisierten Verarbeitung, ordnungsgemäß eingedreht werden können wird durch ein Verfahren mit den Merkmalen des Patentanspruchs 10 gelöst.

Ein solches Gewindeerzeugungsverfahren zur Herstellung von Gewinden in einem Kernloch oder Sackloch oder einem Durchgangsloch eines Werkstücks, insbesondere mit einem Gewindeformwerkzeug nach einem der vorhergehenden Ansprüche, umfasst die folgenden Schritte:
- Bereitstellen eines Werkstücks mit einem Kern- oder Sack- oder Durchgangsloch;
- Spanloses Formen eines Gewindes in dem Kernloch oder Sackloch oder Durchgangsloch, wobei durch das Formen des Gewindes ein Gewindeprofil ausgebildet wird, das zumindest abschnittweise eine Umformkralle oder Schließfalte im Bereich einer Spitze des Gewindeprofils aufweist;
- Entfernen, insbesondere durch spanende Bearbeitung, der Umformkralle oder Schließfalte ausschließlich in einem Gewindeprofilabschnitt, der in oder nahe an einem Eingangsbereich des Kern- oder Sack- oder Durchgangslochs angeordnet ist, wobei das Entfernen der Umformkralle oder Schließfalte das Beibehalten einer
Gewindeprofilbasis des ausgebildeten Gewindeprofils in dem Gewindeprofilabschnitt umfasst.

Mit einem solchen Verfahren ist die Herstellung eines spanlos geformten Gewindes möglich, bei dem sichergestellt ist, dass eine Schraube, insbesondere beim automatisierten Einschrauben, in den dafür vorgesehenen Gewindegang einfädelt und nicht in eine Kavität einer beim spanlosen Formen erzeugten Furchkralle. Dadurch wird das Risiko von Fehlverschraubungen beim automatisierten Einschrauben reduziert oder vermieden. Dabei wird die Umformkralle oder Schließfalte ausschließlich in einem Eingangsbereich des Kern- oder Sack- oder Durchgangslochs entfernt und nicht entlang des gesamten Gewindes. Dies ermöglicht ein effizientes Herstellen des Gewindes

In einer vorteilhaften Ausgestaltung des Verfahrens, weist der Gewindeprofilabschnitt, in dem die Umformkralle oder Schließfalte entfernt wird, das eingangsseitige Ende des Gewindeprofils auf und erstreckt sich bis zu 720°, insbesondere bis zu 540°, vorzugsweise bis zu 360°, um die Werkzeuglängsachse herum.

Auf diese Weise wird die Umformkralle nur so weit entfernt wie notwendig, um ein korrektes Einfädeln der Schraube sicherzustellen, ohne aber die Umformkralle unnötigerweise über eine größere Länge des Gewindeprofils zu entfernen und ohne das erzeugte Gewinde zu schwächen.

Eine weitere vorteilhafte Ausführungsform des Verfahrens umfasst, dass die beibehaltene Gewindeprofilbasis eine Höhe von wenigstens 1/5, insbesondere 1/4, vorzugsweise wenigstens 1/3 oder 1/2, einer Gewindeprofilzahnhöhe des beim spanlosen Formen ausgebildeten Gewindeprofils aufweist.

Auf diese Weise kann die Gewindeprofilbasis nach Entfernung der Furchkralle in ausreichender Weise zur Führung der Schraube genutzt werden.

Ebenfalls vorteilhaft kann es sein, wenn die Umformkralle oder Schließfalte eine bezogen auf einen Eingangsbereich des Kern- oder Sack- oder Durchgangslochs außenliegende Furchkralle und eine innenliegende Furchkralle ausbildet, zwischen denen eine Kavität ausgeformt ist, wobei das Entfernen der Umformkralle oder Schließfalte das Entfernen der außenliegenden Furchkralle und das zumindest teilweise Beibehalten der innenliegende Furchkralle umfasst,
und/oder
wobei das Entfernen der Umformkralle oder Schließfalte das vollständige Entfernen der außenliegenden Furchkralle und der innenliegende Furchkralle umfasst.

Das Entfernen der außenliegenden Furchkralle unter Beibehaltung der innenliegenden Furchkralle kann vorteilhaft sein, um ein möglichst geringes Spanvolumen beim Reiben zu erreichen.

Das vollständige Entfernen der außen- und innenliegenden Furchkralle erlaubt dagegen mehrere Möglichkeiten der Gestaltung der verbleibenden Gewindeformbasis und insbesondere der von dieser gebildeten Oberflächen.

Ferner kann es vorteilhaft sein, wenn die beibehaltene Gewindeprofilbasis spanend so erzeugt wird, dass sie eine Fläche aufweist, die sich parallel zu einer Längsachse des Sack- oder Durchgangslochs erstreckt oder dass die beibehaltene Gewindeprofilbasis spanend so erzeugt wird, dass sie eine Fläche aufweist, die in einem Winkel relativ zu einer Längsachse des Kern- oder Sack- oder Durchgangslochs angeordnet ist.

Eine Gewindeprofilbasis mit einer Fläche, die parallel zur Längsachse des Kern- oder Sack- oder Durchgangslochs angeordnet ist kann vorteilhaft zur Führung und Abstützung der einzudrehenden Schraube genutzt werden. Eine Fläche der Gewindeprofilbasis, die in einem Winkel relativ zur Längsachse des Kern- oder Sack- oder Durchgangslochs angeordnet ist, kann bei bestimmten Anwendungsfällen das Eindrehen einer Schraube erleichtern. Insbesondere ist das der Fall, wenn die Fläche der Gewindeprofilbasis so geneigt ist, dass sie mit einer Längsachse des Kern- oder Sack- oder Durchgangslochs und einer den Eingang des Kern- oder Sack- oder Durchgangslochs um das Sack- oder Durchgangsloch herum umgebenden Werkstückoberfläche jeweils einen Winkel von weniger als 90° einschließt.

Zudem kann es vorteilhaft sein, wenn das spanlose Formen eines Gewindes in dem Kern- oder Sack- oder Durchgangsloch und das Entfernen der Umformkralle oder Schließfalte zumindest zeitweise gleichzeitig durchgeführt wird, insbesondere wobei das spanlose Formen des Gewindes das Eindrehen eines Gewindeformwerkzeugs in das Kern- oder Sack- oder Durchgangsloch umfasst und insbesondere dass das Entfernen der Umformkralle oder Schließfalte durch einen Reibbereich, vorzugsweise mit Reibschneiden, des Gewindeformwerkzeugs durchgeführt wird, sobald das Gewindeformwerkzeugs soweit in das Kern- oder Sack- oder Durchgangsloch eingedreht ist, dass der Reibbereich mit dem in oder nahe an einem Eingangsbereich des Kern- oder Sack- oder Durchgangsloch angeordneten Gewindeprofilabschnitt, insbesondere mit einem eingangsseitigen Ende des Gewindeprofils, in Kontakt kommt.

In einem solchen Verfahren kann die spanlose Erzeugung des Gewindes und die Entfernung der Furchkralle an einem Gewindeprofilabschnitt in einem Eingangsbereich des Kern- oder Sack- oder Durchgangsloch unmittelbar aufeinander folgend, beispielswiese im Falle eines Durchgangslochs, beziehungsweise simultan im Falle eines Sacklochs erfolgen. Ein Werkzeugwechsel oder ein Herausdrehen des Gewindeformwerkzeug vor dem Entfernen der Furchkralle ist nicht notwendig.

Eine weitere vorteilhafte Ausgestaltung umfasst, dass die Länge des Gewindeprofilabschnitts in dem die Umformkralle oder Schließfalte entfernt wird dadurch eingestellt wird, dass das Gewindeformwerkzeug um einen bestimmten Winkel, insbesondere um weniger als 720°, vorzugsweise um weniger als 540°, besonders bevorzugt um genau oder weniger als 360° oder um genau oder weniger 180°, um die Werkzeuglängsachse gedreht wird, wenn der Reibbereich mit dem in oder nahe an einem Eingangsbereich des Kern- oder Sack- oder Durchgangsloch angeordneten Gewindeprofilabschnitt in Kontakt kommt.

Dabei kann die Drehung des Gewindeformwerkzeugs um den bestimmten Winkel durchgeführt werden entweder unmittelbar nachdem der Reibbereich mit dem in oder nahe an einem Eingangsbereich des Kern- oder Sack- oder Durchgangsloch angeordneten Gewindeprofilabschnitt in Kontakt kommt oder mit einer zeitlichen Verzögerung nachdem der Reibbereich mit dem in oder nahe an einem Eingangsbereich des Kern- oder Sack- oder Durchgangsloch angeordneten Gewindeprofilabschnitt in Kontakt kommt. Dadurch ist es in einfacher und effizienter Weise möglich, die Furchkralle in dem gewünschten Gewindeprofilabschnitt unmittelbar auf die Gewindeerzeugung folgend oder simultan zur Gewindeerzeugung zu entfernen.

Die Aufgabe der Erfindung, ein Werkstück mit einem spanlos geformten Gewinde bereitzustellen, bei dem sichergestellt ist, dass Schrauben, insbesondere bei der automatisierten Verarbeitung, ordnungsgemäß eingedreht werden können, wird durch ein Werkstück mit den Merkmalen des Patentanspruchs 14 gelöst. Ein solches Werkstück, insbesondere hergestellt mit einem Verfahren nach einem der Ansprüche 10 bis 13, umfasst wenigstens ein spanlos geformtes Gewinde in einem Kern- oder Sack- oder Durchgangsloch mit einem Gewindeprofil, das einen ersten Gewindeprofilabschnitt aufweist, der in oder nahe an einem Eingangsbereich des Kern- oder Sack- oder Durchgangslochs angeordnet ist und in dem das Gewindeprofil eine Gewindeprofilbasis umfasst und in dem das Gewindeprofil keine, insbesondere keine vollständige, Umformkralle oder Schließfalte aufweist, und wobei das Gewindeprofil einen zweiten Gewindeprofilabschnitt aufweist, der sich an den ersten Gewindeprofilabschnitt anschließt und bei dem das Gewindeprofil eine, insbesondere vollständig ausgebildete, Umformkralle oder Schließfalte im Bereich einer Spitze des Gewindeprofils aufweist.

Werkstück mit einem derartig gestalteten Gewinde stellt sicher, dass beim automatisierten Eindrehen einer Schraube Fehlverschraubungen reduziert oder gar vermieden werden. Durch den ersten Gewindeprofilabschnitt ohne Furchkralle wird vermieden, dass eine Schraube fehlerhaft in eine Kavität der Furchkralle eingedreht wird.

In einer vorteilhaften Ausgestaltung weist die Gewindeprofilbasis in dem ersten Gewindeprofilabschnitt eine Höhe auf und das Gewindeprofil weist in dem zweiten Gewindeprofilabschnitt eine Höhe aufweist, wobei die Höhe des zweiten Gewindeprofilabschnitts höher ist als die Höhe des ersten Gewindeprofilabschnitts.

Auf diese Weise kann die in dem ersten Gewindeprofilabschnitt verbleibende Gewindeprofilbasis als Führung für die Schraube dienen, so dass die Schraube in den dafür vorgesehenen Gewindegang des Werkstückgewindes einfädelt.

In einer weiteren vorteilhaften Ausgestaltung weist die Gewindeprofilbasis eine Höhe von wenigstens 1/5, insbesondere 1/4, vorzugsweise wenigstens 1/3 oder 1/2, einer Gewindeprofilzahnhöhe des zweiten Gewindeprofilabschnitts auf.

In einer solchen Ausgestaltung ist eine besonders vorteilhafte Führung der Schraube durch die Gewindeprofilbasis gewährleistet.

Vorteilhafte Ausgestaltungen und Weiterbildungen ergeben sich aus den jeweils abhängigen Patentansprüchen.

Die Erfindung wird im Folgenden anhand von Ausführungsbeispielen weiter erläutert. Dabei wird auch auf die Zeichnung Bezug genommen, in deren
- FIG 1: ein Gewindeprofil nach einem Auszug aus dem Handbuch für Gewindetechnik, Seite 318, betreffend das Gewindefurchen gemäß dem Stand der Technik;
- FIG 2: ein mit einem Werkzeug oder Verfahren gemäß der Erfindung erzeugbares Gewindeprofil vor dem Entfernen der Umformkralle oder Schließfalte;
- FIG 3: das Gewindeprofil nach FIG 2 nach dem Entfernen der Umformkralle oder Schließfalte;
- FIG 4: eine fehlerhafte Schraubverbindung in einem Gewinde nach dem Stand der Technik;
- FIG 5: eine ordnungsgemäß eingefädelte Schraube in ein erfindungsgemäßes Gewinde;
- FIG 6: eine Seitenansicht eines Gewindeformwerkzeug gemäß einer Ausführungsform der Erfindung;
- FIG 7: eine Querschnittsansicht eines Reibbereichs des Gewindeformwerkzeugs gemäß Schnitt VII - VII in FIG 6;
jeweils schematisch dargestellt sind. Einander entsprechende Teile und Größen sind in den FIG 1 bis 7 mit denselben Bezugszeichen versehen.

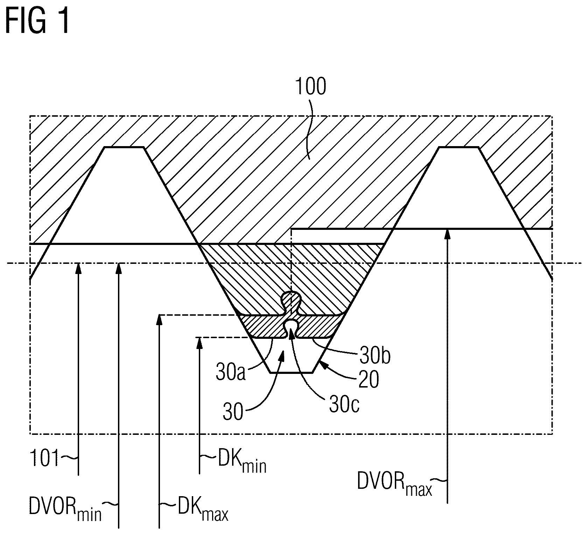

In FIG 1 ist ein durch Gewindefurchen oder Gewindeformen nach dem Stand der Technik hergestelltes Gewinde gezeigt. Gewindeformen oder Gewindefurchen erfordert spezielle Vorbohr-Durchmesser die abhängig von der Verformbarkeit des zu bearbeitenden Werkstoffs, der Werkzeuggeometrie und der gewünschten Tragtiefe des Gewindes sind. Zur beispielhaften Darstellung eines Toleranzbereichs für das Gewinde, sind in FIG 1 ein minimaler Vorbohrdurchmesser (DVORₘᵢₙ) und ein maximaler Vorbohrdurchmesser (DVORₘₐₓ) angegeben. Unter Verwendung desselben Gewindeformwerkzeugs und unter Vernachlässigung etwaiger Verschleißeffekte an dem Gewindeformwerkzeug wird bei einem maximalen Vorbohrdurchmesser (DVORₘₐₓ) ein maximaler Innengewinde-Kerndurchmesser (DKₘₐₓ) hergestellt und bei einem minimalen Vorbohrdurchmesser (DVORₘᵢₙ) wird ein minimaler Innengewindekerndurchmesser (DKₘᵢₙ) hergestellt.

Eine Besonderheit beim spanlosen Erzeugen von Gewinden durch Gewindeformen oder Gewindefurchen stellt die Entstehung von für solche Gewinde typischen Furchkrallen 30 oder Schließfalten dar. Furchkrallen 30 oder Schließfalten bilden sich im Bereich der Spitze des Gewindeprofils 20 aus und bilden dort typischerweise eine Doppelkralle mit einer ersten außenliegenden Furchkralle 30a und einer zweiten innenliegenden Furchkralle 30b, die eine Kavität 30c zumindest teilweise umschließen. Die Entstehung solcher Furchkrallen 30 oder Schließfalten beim Gewindeformen ist bekannt, wird üblicherweise bei der Auslegung von Gewinden und Prozessen berücksichtigt und stellt nach bisheriger Auffassung keine Beeinträchtigung der Gewindefunktion dar.

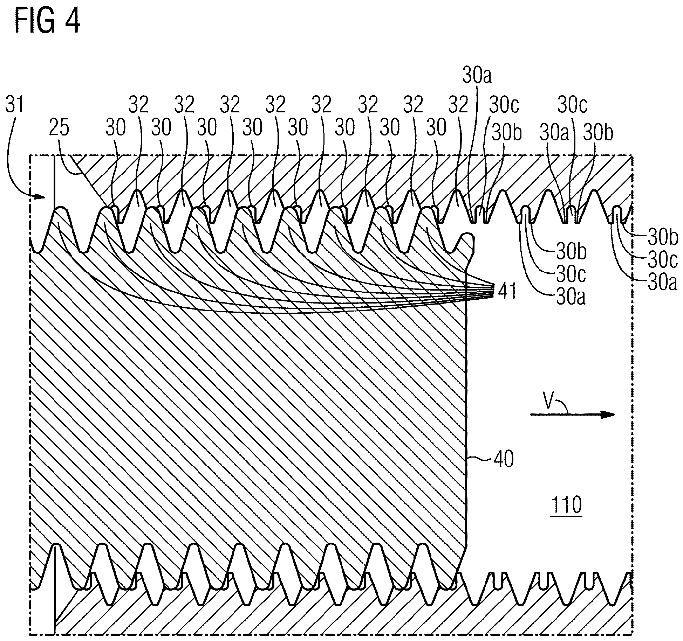

FIG 4 zeigt ein gemäß dem Stand der Technik hergestelltes Gewinde mit einem Gewindeprofil, bei dem sich Furchkrallen 30 an der Spitze des Gewindeprofils 20 ausgebildet haben. Die Furchkrallen 30 sind im Wesentlichen durchgängig entlang des vollständigen Gewindeprofils 20 vorhanden. In einem Eingangsbereich 31 des Kern- oder Sack- oder Durchgangslochs 110 bildet die dort vorhandene Furchkralle 30, beziehungsweise deren Kavität 30c eine Öffnung.

Noch nicht aus dem Stand der Technik bekannt war, dass es in manchen Fällen vorkommen kann, beispielsweise beim automatisierten Eindrehen von Schrauben in das Gewinde, dass die Außengewindezähne 41 der Schraube im Eingangsbereich 31 nicht wie beabsichtigt in den Gewindegang 32 des Werkstücks 100, d.h. zwischen die den Gewindegang 32 begrenzenden Gewindeprofilflanken 21 "einfädelt", sondern dass die Außengewindezähne 41 der Schraube 40 in die Kavität 30c der Furchkralle 30 "einfädeln", wie diese in FIG 4 gezeigt ist.

Insbesondere beim automatisierten Verschrauben wird eine Schraube deren Gewinde durch die Öffnung der Kavität 30c in die Kavität 30c eingefädelt ist durch die Einschraubkraft immer weiter entlang der Kavität 30c eingeschraubt. In dieser Situation kann die Furchkralle 30 deformiert werden oder brechen oder die Schraube wird bis zu ihrer Endposition durch die Kavität 30c hindurch eingeschraubt. In allen diesen Fällen ist die Schraubverbindung aber nicht ordnungsgemäß und hält einer Belastung für die sie im Grunde ausgelegt ist, nicht stand.

Um diesem Problem zu begegnen, wird gemäß der Erfindung vorgeschlagen, die Furchkralle 30 in einem Eingangsbereich 31 des Kern- oder Sack- oder Durchgangslochs 110 so zu bearbeiten, dass ein Einfädeln des Gewindes, bzw. der Außengewindezähne 41 der Schraube 40 in die Kavität 30c der Furchkralle 30 unterbunden wird und dass das so bearbeitete Gewindeprofil 20 dazu beiträgt, dass das Gewinde der Schraube 40 in den dafür vorgesehenen Gewindegang 32 des Gewindeprofils 20 einfädelt.

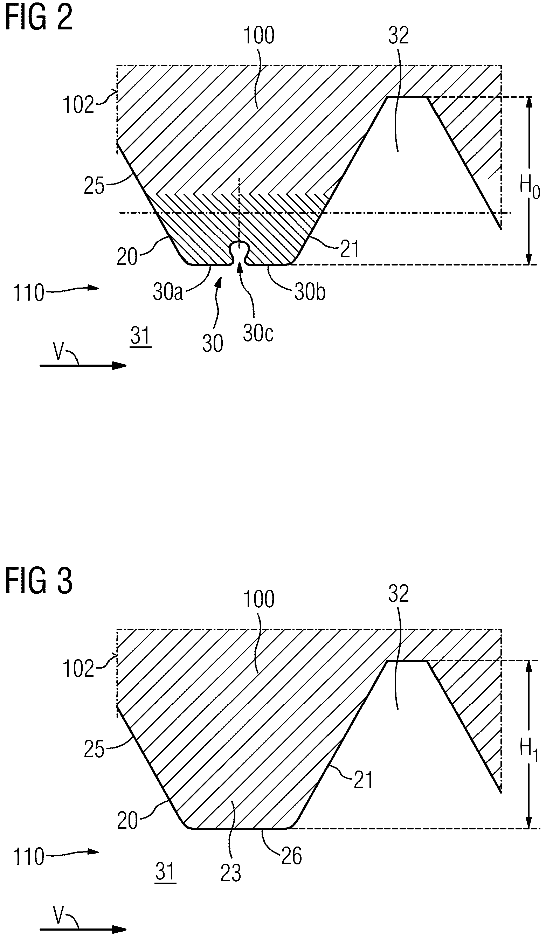

FIG 2 zeigt einen Zahn eines Gewindeprofil 20 mit einer bezogen auf den Eingang des Kern- oder Sack- oder Durchgangslochs 110 außenliegenden Furchkralle 30a und einer innenliegenden Furchkralle 30b, zwischen denen die Kavität 30c gebildet ist. Der Zahn wird dabei von einem Gewindeprofilabschnitt umfasst, der in oder nahe an dem Eingangsbereich 31 des Kern- oder Sack- oder Durchgangslochs 110 angeordnet ist. Insbesondere umfasst dieser Gewindeprofilabschnitt das eingangsseitige Ende des Gewindeprofils, also denjenigen Punkt an dem die Kavität 30c eine Öffnung aufweist, durch die das Gewinde der Schraube in die Kavität 30c beim Eindrehen der Schraube eindringen könnte. Der Zahn, beziehungsweise der Gewindeprofilabschnitt weist dabei eine Höhe H0 auf.

Um zu verhindern, dass die Schraube 40 mit ihrem Gewinde in die Kavität 30c einfädeln kann, wird der Zahn über seine Erstreckung entlang des Gewindeprofilabschnitts so bearbeitet, dass die innere und äußere Furchkralle 30a, 30b sowie die Kavität 30c entfernt werden und so, dass zugleich eine Gewindeprofilbasis 23 mit einer Höhe H1 verbleibt. Eines solches bearbeitetes Gewindeprofil 20 mit verbleibender Gewindeprofilbasis 21 ist in FIG 3 dargestellt.

Die Höhe H1 der verbleibenden Gewindeprofilbasis 21 ist dabei geringer als die Höhe H0 vor der Entfernung der Furchkralle 30, aber noch so hoch, dass die Gewindeflanke 21 ausreichend vorhanden ist, um die Außengewindezähne 41 der Schraube 40 in den vorgesehenen Gewindegang 32 des Gewindeprofils zu führen. Die Gewindeprofilbasis 23 weist nach der Bearbeitung eine Fläche 26 auf, die sich parallel zur Werkzeugachse A erstrecken kann oder alternativ einen Winkel mit der Werkzeuglängsachse A einschließen kann.

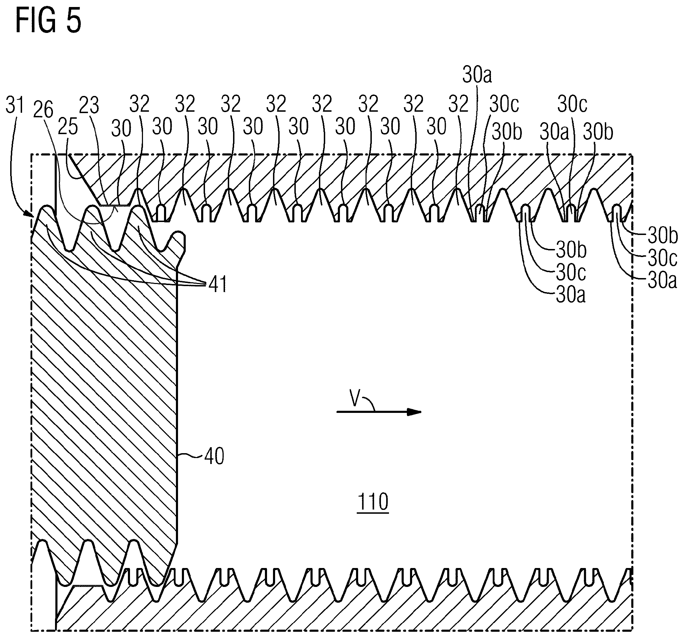

FIG 5 zeigt ein zusätzlich bearbeitetes Gewinde, bei dem ein Gewindeprofilabschnitt im Eingangsbereich 31 des Kern- oder Sack- oder Durchgangslochs 110, entlang einer Erstreckung über die ersten 360° des Gewindes so bearbeitet ist, dass die Furchkralle 30 entlang der ersten 360° des Gewindes entfernt ist und lediglich noch eine Gewindeprofilbasis 23 mit einer sich parallel zur Werkzeugachse A erstreckenden Fläche 26 aufweist.

Es ist erkennbar, dass der dem Eingangsbereich 31 nächstliegen, erste Zahn des Gewindeprofils bearbeitet wurde und lediglich eine Gewindeprofilbasis 23 mit einer Fläche 26 aufweist. Alle in Vorschubrichtung V folgenden, weiter im Innern des Kern- oder Sack- oder Durchgangslochs 110 angeordneten Zähne weisen nach wie vor ihre Furchkrallen 30 auf.

Durch das Entfernen der Furchkralle 30 an dem Gewindeprofil 20 im Eingangsbereich 31, wird verhindert, dass der der Stirnseite der Schraube 40 nächstliegende Außengewindezahn 41 in die Kavität 30c der Furchkralle 30 eindringen kann. Vielmehr wird der der Stirnseite der Schraube 40 nächstliegende Außengewindezahn 41 durch die verbleibende Gewindeprofilbasis 23 so geführt, dass der Außengewindezahn in den Gewindegang 32 des Gewindeprofils 20 bewegt werden.

Dadurch wird die Schraube 40 beim folgenden Eindrehen ordnungsgemäß in das Muttergewinde eingedreht.

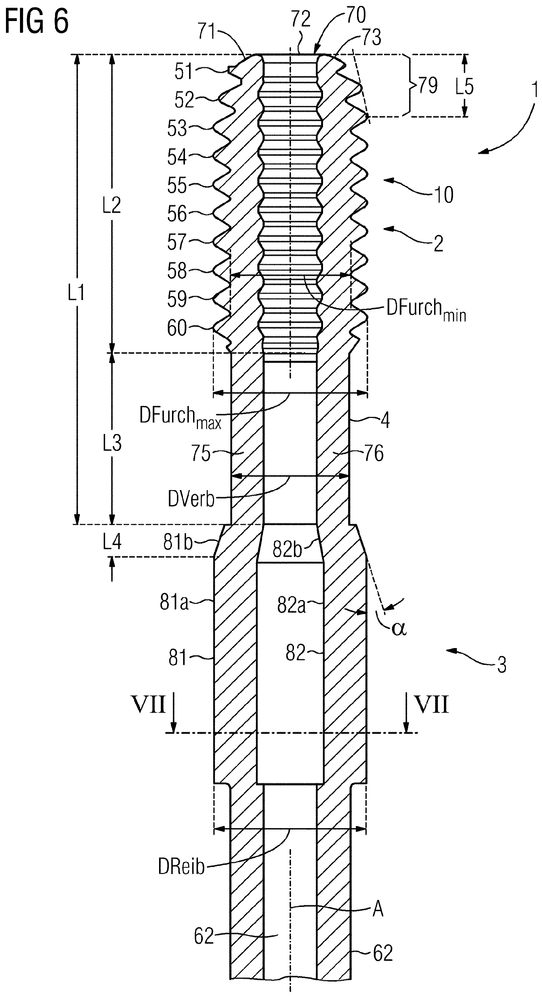

FIG 6 zeigt ein Ausführungsbeispiel eines Gewindeformwerkzeugs 1 gemäß der Erfindung. Das Gewindeformwerkzeug 1 umfasst einen an eine Werkzeugmaschine oder einen Antrieb ankoppelbaren Schaft 61 und an seinem gegenüberliegenden freien Ende einen Gewindeformbereich 2 und eine Stirnseite 70. Das Gewindeformwerkzeugs 1 ist entlang einer zentralen Werkzeugachse A ausgedehnt, um die das Gewindeformwerkzeug 1 in einer Drehrichtung oder entgegengesetzt drehbar ist und entlang der das Gewindeformwerkzeug 1 axial bewegbar ist, um eine Schraubbewegung gemäß der vorgegebenen Gewindesteigung P zu ermöglichen. Der Gewindeformbereich 2, beziehungsweise das Gewindeformprofil 10 ist mit der Steigung P ausgebildet. Radial wird hier als radial oder senkrecht zur Werkzeugachse A und axial als entlang oder parallel zur Werkzeugachse A verstanden.

Das Gewindeformwerkzeug 1 weist wenigstens eine, vorzugsweise mehrere, Reihen von jeweils mehreren axial hintereinander angeordneten Drückstollen 50 bis 60 (oder: Furchzähne, Furchkeile, Formzähne, Formkeile) auf, die vorzugsweise jeweils auf einem zugehörigen Drückstollensteg 71 bis 74 angeordnet sind. In der gezeigten Ausführungsform sind insgesamt vier in Umfangsrichtung verteilt angeordnete Drückstollenstege 71 bis 74 vorhanden. Die vier Drückstollenstege 71 bis 74 sind jeweils voneinander durch vier Zwischennuten 75 bis 78 getrennt.

Alternativ können beispielsweise auch Paare von zwei axialen Reihen von Drückstollen vorgesehen sein, zwischen denen jeweils eine axiale Zwischennut ausgebildet ist, also insgesamt sechs Reihen von Drückstollen oder Drückstollenstegen.

Die Drückstollen 50 bis 60 sind gemäß dem oder den zu erzeugenden Gewindegängen und dessen oder deren Gewindesteigung P entlang einer Helix oder Schraubenlinienförmigen um die Werkzeugachse A angeordnet. Entlang der Helix oder Schraubenlinie folgen aufeinander jeweils ein Drückstollen 51, 52, 53, 54, 55, 56, 57, 58, 59, 60, die nacheinander oder gleichzeitig in demselben Gewindegang arbeiten.

Der Arbeitsbereich 2 weist zudem einen Anfurchbereich auf, der kegelförmig ausgebildet ist und so einen Anfurchkegel 79 bildet, in dem die Drückstollenhöhe, also der maximale Außenradius bei dem Drückstollenscheitel der Stirnseite 76, von der Stirnseite 76 aus gesehen axial nach hinten von einem zunächst kleineren Wert auf den endgültigen maximalen Wert des maximaler Gewindeformprofildurchmesser DFurch_{Max} zunimmt.

Auch wenn das Gewindeformwerkzeug 1 und das Verfahren zum Erzeugen eines Gewindes in den Ausführungsbeispielen für ein Innengewinde gezeigt und beschrieben wurden, sind die Maßnahmen gemäß der Erfindung ebenso beim Nachformen eines Außengewindes anwendbar. Der Gewindegrund des Innengewindes entspricht dann dem Gewindekopf oder Gewindescheitelbereich des Außengewindes.

Mit dem Gewindeformwerkzeug 1 wird in einem Werkstück 100 mit einem Kern- oder Sack- oder Durchgangsloch 110 durch spanloses Formen ein Gewinde in dem Kern- oder Sack- oder Durchgangsloch 110 erzeugt. Dies geschieht durch Eindrehen des Gewindeformbereichs 2 in das Kern- oder Sack- oder Durchgangsloch 110 in Vorschubrichtung V und entsprechend einer Gewindesteigung P. Dabei wird durch das Formen des Gewindes ein Gewindeprofil 20 ausgebildet, das zumindest abschnittweise eine Umformkralle 30 oder Schließfalte im Bereich einer Spitze des Gewindeprofils 20 aufweist.

Sobald das Gewinde mit der vordefinierten Tiefe in dem Kern- oder Sack- oder Durchgangsloch 110 ausgebildet ist, wird mittels des Reibbereichs 3 die Umformkralle 30 oder Schließfalte teilweise oder vollständig entfernt. Die geschieht ausschließlich in einem Gewindeprofilabschnitt, der in oder nahe an einem Eingangsbereich des Kern- oder Sack- oder Durchgangsloch 110 angeordnet ist, wobei das Entfernen der Umformkralle 30 oder Schließfalte das Beibehalten einer Gewindeprofilbasis 23 des ausgebildeten Gewindeprofils 20 in dem Gewindeprofilabschnitt umfasst.

Die vordefinierte Tiefe des zu erzeugenden Gewindes ist dabei durch die axiale Länge L2 des Gewindeformbereichs 2 und die axiale Länge L3 des Verbindungsabschnitts 4, der den Gewindeformbereich 2 mit dem Reibbereich 3 verbindet, definiert. Sobald bei der Gewindeerzeugung eine Tiefe von L1 = L2+L3, also einem axialen Abstand des Reibbereichs 3 von der Stirnseite 70 des Gewindeformwerkzeugs 1, erreicht ist, stößt der Reibbereich 3 mit seinen kegelförmigen Reibschneidenbereichen 81b, 82b an den dem Eingang des Kern- oder Sack- oder Durchgangslochs 110 nächstliegenden Gewindeprofilabschnitt. Sobald der Reibbereich 3 in Kontakt mit dem Eingangsbereich 31 des Kern- oder Sack- oder Durchgangsloch 110 nächstliegenden Gewindeprofilabschnitt gelangt, wird das Gewindeformwerkzeug 1 beispielsweise noch ein weiteres Mal um 360° in das Kern- oder Sack- oder Durchgangsloch 110 eingedreht. Dabei schneiden die kegelförmigen Reibschneidenbereichen 81b, 82b das Gewindeprofil in dem Gewindeprofilabschnitt so an, dass die Furchkralle 30 entfernt wird und zugleich eine Gewindeprofilbasis 23 mit ausreichender Höhe H1 zurückbleibt, um das Gewinde der Schraube 40 zu führen. Genauer gesagt wird die Furchkralle 30 genau an dem Gewindeprofilabschnitt entfernt, der sich am Eingangsbereich 31 beginnend um 360° um die Werkzeuglängsachse A herum erstreckt.

Bei der dargestellten Ausführungsform, weisen die kegelförmigen Reibschneidenbereiche 81b, 82b einen Kegelwinkel α relativ zur Werkzeuglängsachse A in einem Bereich von 10° bis 45°, vorzugsweise von 20° bis 30°, auf. Die Reibschneidenbereiche 81b, 82b weisen ferner eine axiale Länge L4 auf, die der Gewindesteigung P entspricht, also dem axialen Abstand zwischen jeweils axial unmittelbar hintereinander liegenden Drückstollen 50 bis 60 des Gewindeformbereichs 2. Dies ermöglicht es, mit genau einer Werkzeugumdrehung um 360° die Furchkralle 30 an einem um 360° umlaufenden Gewindeprofilabschnitt zu entfernen. Mit anderen Worten wird die Furchkralle 30 genau an dem vordersten, vollständig umlaufenden Gewindeprofilabschnitt entfernt und bleibt an dem daran anschließenden Gewindeprofil bestehen.

Alternativ kann vorgesehen sein, dass die axiale Länge L4 kürzer ist als die vorgegebene Gewindesteigung P. In diesem Fall wird mit genau einer Werkzeugumdrehung um 360° die Furchkralle 30 an einem um weniger als 360° umlaufenden Gewindeprofilabschnitt entfernt. Dadurch kann im Rahmen bestimmter Toleranzen sichergestellt werden, dass die Furchkralle 30 nur genau an dem vordersten, vollständig umlaufenden Gewindeprofilabschnitt entfernt wird und nicht in dem an dem vordersten Gewindeprofilabschnitt anschließenden Abschnitt.

Darüber hinaus kann der Reibbereich 3, beziehungsweise die kegelförmigen Reibschneidenbereiche 81b, 82b, mit einer Steigung ausgelegt werden. Diese Steigung kann in einem Bereich von 0,5 bis 1,5 der vordefinierten Steigung P vorgesehen sein. Insbesondere ein Bereich von 0,7 x P bis 1,2 x P hat sich für manche Anwendungsfälle als vorteilhaft herausgestellt. Die Steigung des Reibbereichs 3 soll dabei ungleich der Steigung P sein.

Werden beispielsweise die kegelförmigen Reibschneidenbereiche 81b, 82b mit einer Steigung von 1,5 x P gestaltet, so kann mit genau einer Werkzeugumdrehung um 360° die Furchkralle 30 an dem vordersten Gewindeprofilabschnitt entfernt werden, wobei die vorlaufenden Reibschneiden der Reibschneidenbereiche 81b, 82b einen im Gewindegrund zwischen dem vordersten Gewindeprofilabschnitt und dem nachfolgenden Gewindeprofilabschnitt anhalten. Dadurch kann sichergestellt werden, dass die Reibschneidenbereiche 81b, 82b nicht an dem nachfolgenden Gewindeprofilabschnitt weiterarbeiten. Insbesondere durch geeignete Auswahl der Länge L4 kann außerdem eine Fläche 26 des verbleibenden Stumpfes des Gewindeprofils 20 erreicht werden, die im Wesentlichen parallel und/oder koaxial zur Längsachse des Kern- oder Durchgangslochs angeordnet ist.

Zudem können die axial vordersten Kanten der kegelförmigen Reibschneidenbereiche 81b, 82b in dieser Ausführungsform rechtwinklig zur Werkzeuglängachse A angeordnet sein.

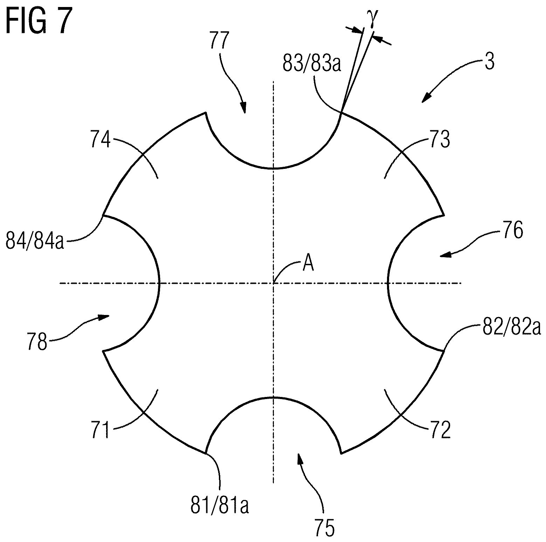

FIG 7 zeigt eine Querschnittsansicht eines Reibbereichs gemäß Schnitt VII - VII in FIG 6. Die Stege 71-74 mit den achsparallelen Reibschneidenbereichen 81a bis 84a sind jeweils voneinander durch Zwischennuten 75 bis 78 getrennt. Die Reibschneiden der Reibschneidenbereichen 81a bis 84a weisen dabei einen Spanwinkel γ von maximal 2° auf.

### Bezugszeichenliste

- 1: Gewindeformwerkzeug
- 2: Gewindeformbereich
- 3: Reibbereich
- 4: Verbindungsabschnitt

- 10: Profil des Gewindeformwerkzeugs
- 20: Gewindeprofil
- 21: Gewindeflanke
- 23: Gewindeprofilbasis
- 25: Senkung
- 26: Fläche
- 30: Umformkralle
- 30a: außenliegende Furchkralle
- 30b: innenliegende Furchkralle
- 30c: Kavität
- 31: Eingangsbereich des Sack- oder Durchgangslochs
- 32: Gewindegang

- 40: Schraube
- 41: Außengewindezähne

- 50 bis 60: Drückstollen
- 61: Schaft
- 62: Kanal
- 70: Stirnseite
- 71-74: Stege
- 75 bis 78: Zwischennuten
- 79: Anfurchkegel
- 81 bis 84: Reibschneiden
- 81a bis 84a: achsparallele Reibschneidenbereiche
- 81b, 82b: kegelförmige Reibschneidenbereiche
- α: Kegelwinkel der kegelförmigen Reibschneidenbereiche
- γ: Spanwinkel der Reibschneiden

- 100: Werkstück
- 101: Flankendurchmesser des Gewindeformbereichs
- 102: Werkstückoberfläche
- 110: Kernloch oder Sackloch oder Durchgangsloch

- DVORₘᵢₙ: minimaler Vorbohrdurchmesser
- DVORₘₐₓ: maximaler Vorbohrdurchmesser
- DKₘᵢₙ: minimaler Innengewindekerndurchmesser
- DKₘₐₓ: maximaler Innengewindekerndurchmesser

- DFurch_{Max}: maximaler Gewindeformprofildurchmesser
- DFurch_{Min}: minimaler Gewindeformprofildurchmesser
- DReib: Reibbereichsdurchmesser
- DVerb: Verbindungsabschnittsdurchmesser

- V: Vorschubrichtung des Gewindeformwerkzeugs
- H0: Höhe eines Gewindeprofilzahns des Gewindeprofils
- H1: Höhe der Gewindeprofilbasis
- A: Längsachse des Gewindeformwerkzeugs
- P: Steigung
- L1: Abstand des Reibbereichs von der Werkzeugstirnfläche
- L2: Länge des Gewindeformbereichs
- L3: Länge des Verbindungsabschnitts
- L4: Länge der kegelförmigen Reibschneidenbereiche
- L5: Länge des Anfurchkegels

## Patentansprüche

1. Gewindeformwerkzeug (1) mit einem ein Gewindeformprofil (10) aufweisenden Gewindeformbereich (2) und einem Reibbereich (3), wobei das Gewindeformwerkzeug (1) dafür vorgesehen ist, zur Erzeugung eines Gewindes in einer definierten Vorschubrichtung (V) bewegt zu werden, wobei der Gewindeformbereich (2) in Vorschubrichtung (V) vor dem Reibbereich (3) angeordnet ist, wobei das Gewindeformprofil (10) einen bezogen auf eine Werkzeuglängsachse (A) maximalen radialen Gewindeformprofildurchmesser (DFurch_{Max}) aufweist und wobei der Reibbereich (3) einen bezogen auf die Werkzeuglängsachse (A) maximalen radialen Reibbereichsdurchmesser (DReib) aufweist und wobei der maximale radiale Gewindeformprofildurchmesser (DFurch_{Max}) des Gewindeformbereichs (2) größer ist als der maximale radiale Reibbereichsdurchmesser (DReib) des Reibbereichs (3).

2. Gewindeformwerkzeug (1) nach Anspruch 1, **dadurch gekennzeichnet, dass** eine Differenz zwischen maximalen radialen Gewindeformprofildurchmesser (DFurch_{Max}) und maximalen radialen Reibbereichsdurchmesser (DReib) in einem Bereich von 0,05mm bis 2mm, insbesondere von 0,15mm bis 1,1mm, vorzugsweise von 0,6mm bis 1mm, liegt.

3. Gewindeformwerkzeug (1) nach einem der vorhergehenden Ansprüche, **dadurch gekennzeichnet, dass** der Reibbereich (3) mindestens einen, insbesondere mehrere, Reibschneiden (81 bis 84) aufweist,
insbesondere wobei die mehreren Reibschneiden (81 bis 84) koaxial zur Werkzeuglängsachse (A) an dem Gewindeformwerkzeug (1) angeordnet sind,
und/oder
insbesondere wobei die mindestens eine, insbesondere mehrere, vorzugsweise alle, Reibschneiden (81 bis 84) achsparallel zur Werkzeuglängsachse (A) an dem Gewindeformwerkzeug (1) angeordnet ist,
und/oder
insbesondere wobei die mindestens eine, insbesondere mehrere, vorzugsweise alle, Reibschneiden (81 bis 84) gekrümmt oder gedrallt oder spiralförmig um die Werkzeuglängsachse (A) herum an dem Gewindeformwerkzeug (1) angeordnet ist.

4. Gewindeformwerkzeug (1) nach einem der vorhergehenden Ansprüche, **dadurch gekennzeichnet, dass** der Reibbereich (3) wenigstens einen ersten Abschnitt aufweist, in dem der radiale Außendurchmesser (DReib) des Reibbereichs (3) konstant bleibt, insbesondere wobei der Reibbereich (3) in dem ersten Abschnitt mindestens eine, vorzugsweise mehrere, Reibschneidenbereiche (81a, 82a) aufweist, deren radialer Abstand zur Werkzeuglängsachse entlang der Vorschubrichtung (V) konstant bleibt, und/oder
dass der Reibbereich (3) wenigstens einen zweiten Abschnitt aufweist, in dem der radiale Außendurchmesser (DReib) des Reibbereichs (3) in einer Richtung entgegen der Vorschubrichtung (V) zunimmt, insbesondere wobei der Reibbereich (3) in dem zweiten Abschnitt mindestens eine, vorzugsweise mehrere, Reibschneidenbereiche (81b, 82b) aufweist, deren radialer Abstand zur Werkzeuglängsachse in einer Richtung entgegen der Vorschubrichtung (V) zunimmt.

5. Gewindeformwerkzeug (1) nach einem der vorhergehenden Ansprüche, **dadurch gekennzeichnet, dass** der Reibbereich (3) wenigstens einen zweiten Abschnitt mit mindestens einem, vorzugsweise mehreren, Reibschneidenbereichen (81b, 82b) aufweist, wobei die Reibschneidenbereiche (81b, 82b) des zweiten Abschnitts eine oder mehrere Reibschneiden umfassen, wobei die Reibschneidenbereiche (81b, 82b) des zweiten Abschnitts oder die von den Reibschneidenbereichen des zweiten Abschnitts umfassten Reibschneiden relativ zur Werkzeuglängsachse (A) in einem Winkel (α), insbesondere in einem Winkel (α) in einem Winkelbereich von 5° bis 40°, vorzugsweise in einem Winkelbereich 15° bis 30°, besonderes bevorzugt in einem Winkel (α) von 20°, angeordnet sind
und/oder
dass der Reibbereich (3) wenigstens einen zweiten Abschnitt aufweist, der eine oder mehrere Reibschneidenbereiche (81b, 82b) umfasst, wobei die Reibschneidenbereiche (81b, 82b) Teilbereiche einer Mantelfläche oder eine vollständige Mantelfläche eines Kegelstumpfes ausbilden.

6. Gewindeformwerkzeug (1) nach einem der Ansprüche 4 oder 5, **dadurch gekennzeichnet, dass** der zweite Abschnitt in Vorschubrichtung (V) vor dem ersten Abschnitt angeordnet ist, insbesondere wobei der zweite Abschnitt unmittelbar in den ersten Abschnitt übergeht.

7. Gewindeformwerkzeug (1) nach einem der vorhergehenden Ansprüche, **dadurch gekennzeichnet, dass** der Reibbereich (3), insbesondere die Reibschneidenbereiche des ersten Abschnitts (81a, 82a) und/oder die Reibschneidenbereiche des zweiten Abschnitts (81b, 82b), eine Steigung aufweisen, die von einer vordefinierten Steigung (P) des Gewindeformbereichs (2) abweicht, insbesondere wobei die Steigung des Reibbereichs (3) in einem Bereich von 0,5 bis 1,5 x der Steigung (P) des Gewindeformbereichs (2) vorgesehen und ungleich der Steigung (P) des Gewindeformbereichs (2) ist
oder
**dadurch gekennzeichnet, dass** der Reibbereich (3), insbesondere die Reibschneidenbereiche des zweiten Abschnitts (81b, 82b), eine axiale Länge L4 aufweist, die kürzer ist als eine vordefinierte Steigung (P) des Gewindeformbereichs (2).

8. Gewindeformwerkzeug (1) nach einem der vorhergehenden Ansprüche, **dadurch gekennzeichnet, dass** der Gewindeformbereich (2) von dem Reibbereich (3) durch mindestens einen Verbindungsabschnitt (4) getrennt ist, wobei das Gewindeformprofil (10) einen bezogen auf eine Werkzeuglängsachse (A) minimalen radialen Gewindeformprofildurchmesser (DFurch_{Min}) aufweist und wobei der Verbindungsabschnitt (4) einen Verbindungsabschnittsdurchmesser (DVerb) aufweist, der geringer ist als der minimale radiale Gewindeformprofildurchmesser (DFurch_{Min}).

9. Gewindeformwerkzeug (1) nach einem der vorhergehenden Ansprüche, **dadurch gekennzeichnet, dass** der Gewindeformbereich (2) von dem Reibbereich (3) durch mindestens einen Verbindungsabschnitt (4) getrennt ist, der eine Verbindungsabschnittslänge (L3) in Richtung der Werkzeuglängsachse (A) aufweist, wobei der Gewindeformbereich (2) in Richtung der Werkzeuglängsachse (A) eine Gewindeformbereichslänge (L2) aufweist, wobei der Gewindeformbereich (2) einen Anfurchkegel (79) mit einer Anfurchkegellänge (L5) in Richtung der Werkzeuglängsachse (A) aufweist und bei eine der folgenden Bedingungen erfüllt ist: 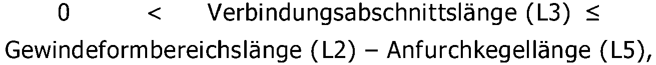 0 < Verbindungsabschnittslänge (L3) ≤ Gewindeformbereichslänge (L2) - Anfurchkegellänge (L5), oder 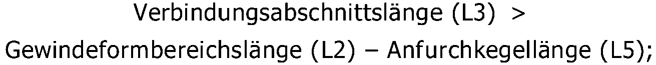 Verbindungsabschnittslänge (L3) > Gewindeformbereichslänge (L2) - Anfurchkegellänge (L5);

10. Gewindeerzeugungsverfahren zur Herstellung von Gewinden in einem Kernloch oder Sackloch oder Durchgangsloch (110) eines Werkstücks (100), insbesondere mit einem Gewindeformwerkzeug (1), vorzugsweise nach einem der vorhergehenden Ansprüche, umfassend die folgenden Schritte:
- Bereitstellen eines Werkstücks (100) mit einem Kern- oder Sack- oder Durchgangsloch (110);
- Spanloses Formen eines Gewindes in dem Kern- oder Sack- oder Durchgangsloch (110), wobei durch das Formen des Gewindes ein Gewindeprofil (20) ausgebildet wird, das zumindest abschnittweise eine Umformkralle (30) oder Schließfalte im Bereich einer Spitze des Gewindeprofils (20) aufweist;
- Entfernen, insbesondere durch spanende Bearbeitung, der Umformkralle (30) oder Schließfalte ausschließlich in einem Gewindeprofilabschnitt, der in oder nahe an einem Eingangsbereich des Kern-, Sack- oder Durchgangsloch (110) angeordnet ist, wobei das Entfernen der Umformkralle (30) oder Schließfalte das Beibehalten einer Gewindeprofilbasis (23) des ausgebildeten Gewindeprofils (20) in dem Gewindeprofilabschnitt umfasst.

11. Gewindeerzeugungsverfahren nach Anspruch 10, **dadurch gekennzeichnet, dass** der Gewindeprofilabschnitt in dem die Umformkralle (30) oder Schließfalte entfernt wird, das eingangsseitige Ende des Gewindeprofils (20) aufweist und sich bis zu 720°, insbesondere bis zu 540°, vorzugsweise bis zu 360°, um die Werkzeuglängsachse (A) herum erstreckt und/oder
**dadurch gekennzeichnet, dass** die beibehaltene Gewindeprofilbasis (23) eine Höhe (H1) von wenigstens 1/5, insbesondere 1/4, vorzugsweise wenigstens 1/3 oder 1/2, einer Gewindeprofilzahnhöhe (H0) des beim spanlosen Formen ausgebildeten Gewindeprofils (20) aufweist.

12. Gewindeerzeugungsverfahren nach einem der Ansprüche 10 bis 11, **dadurch gekennzeichnet, dass** die Umformkralle (30) oder Schließfalte eine bezogen auf einen Eingangsbereich des Kern- oder Sack- oder Durchgangslochs (110) außenliegende Furchkralle (30a) und eine innenliegende Furchkralle (30b) ausbildet, zwischen denen eine Kavität (30c) ausgeformt ist, wobei das Entfernen der Umformkralle (30) oder Schließfalte das Entfernen der außenliegenden Furchkralle (30a) und das zumindest teilweise Beibehalten der innenliegende Furchkralle (30b) umfasst,
und/oder
wobei das Entfernen der Umformkralle (30) oder Schließfalte das vollständige Entfernen der außenliegenden Furchkralle (30a) und der innenliegende Furchkralle (30b) umfass
und/oder
**dadurch gekennzeichnet, dass** die beibehaltene Gewindeprofilbasis (23) spanend so erzeugt wird, dass sie eine Fläche aufweist, die sich parallel zu einer Längsachse des Kern- oder Sack- oder Durchgangslochs (110) erstreckt oder dass die beibehaltene Gewindeprofilbasis (23) spanend so erzeugt wird, dass sie eine Fläche aufweist, die in einem Winkel relativ zu einer Längsachse des Kern- oder Sack- oder Durchgangslochs (110) angeordnet ist.

13. Gewindeerzeugungsverfahren nach einem der Ansprüche 10 bis 12, **dadurch gekennzeichnet, dass** das spanlose Formen eines Gewindes in dem Kern- oder Sack- oder Durchgangsloch (110) und das Entfernen der Umformkralle (30) oder Schließfalte zumindest zeitweise gleichzeitig durchgeführt wird, insbesondere wobei das spanlose Formen des Gewindes das Eindrehen eines Gewindeformwerkzeugs (1) in das Kern- oder Sack- oder Durchgangsloch (110) umfasst und das Entfernen der Umformkralle (30) oder Schließfalte durch einen Reibbereich (3), insbesondere mit Reibschneiden (81 bis 84), des Gewindeformwerkzeugs (1) durchgeführt wird, sobald das Gewindeformwerkzeugs (1) soweit in das Kern- oder Sack- oder Durchgangsloch (110) eingedreht ist, dass der Reibbereich (3) mit dem in oder nahe an einem Eingangsbereich des Kern- oder Sack- oder Durchgangsloch (110) angeordneten Gewindeprofilabschnitt, insbesondere mit einem eingangsseitigen Ende des Gewindeprofils (20), in Kontakt kommt insbesondere
**dadurch gekennzeichnet, dass** die Länge des Gewindeprofilabschnitts in dem die Umformkralle (30) oder Schließfalte entfernt wird dadurch eingestellt wird, dass das Gewindeformwerkzeug (1) um einen bestimmten Winkel, insbesondere um weniger als 720°, vorzugsweise um weniger als 540°, besonders bevorzugt um genau oder weniger als 360° oder um genau oder weniger 180°, um die Werkzeuglängsachse (A) gedreht wird, wenn der Reibbereich (3) mit dem in oder nahe an einem Eingangsbereich des Kern- oder Sack- oder Durchgangsloch (110) angeordneten Gewindeprofilabschnitt in Kontakt kommt.

14. Werkstück (100), insbesondere hergestellt mit einem Verfahren nach einem der Ansprüche 10 bis 13, umfassend wenigstens ein spanlos geformtes Gewinde in einem Kern- oder Sack- oder Durchgangsloch (110) mit einem Gewindeprofil (20), das einen ersten Gewindeprofilabschnitt aufweist, der in oder nahe an einem Eingangsbereich des Kern- oder Sack- oder Durchgangslochs (110) angeordnet ist und in dem das Gewindeprofil (20) eine Gewindeprofilbasis (23) umfasst und in dem das Gewindeprofil (20) keine, insbesondere keine vollständige, Umformkralle (30) oder Schließfalte aufweist, und wobei das Gewindeprofil (20) einen zweiten Gewindeprofilabschnitt aufweist, der sich an den ersten Gewindeprofilabschnitt anschließt und bei dem das Gewindeprofil eine, insbesondere vollständig ausgebildete, Umformkralle (30) oder Schließfalte im Bereich einer Spitze des Gewindeprofils (20) aufweist.

15. Werkstück (100) nach Anspruch 14, **dadurch gekennzeichnet, dass** die Gewindeprofilbasis (23) in dem ersten Gewindeprofilabschnitt eine Höhe (H1) aufweist und dass das Gewindeprofil (20) in dem zweiten Gewindeprofilabschnitt eine Höhe (H0) aufweist, wobei die Höhe (H0) des zweiten Gewindeprofilabschnitts höher ist als die Höhe (H1) des ersten Gewindeprofilabschnitts,
und/oder **dadurch gekennzeichnet, dass** die Gewindeprofilbasis (23) eine Höhe (H1) von wenigstens 1/5, insbesondere 1/4, vorzugsweise wenigstens 1/3 oder 1/2, einer Gewindeprofilzahnhöhe (H0) des zweiten Gewindeprofilabschnitts aufweist.
